# EUROPÄISCHE PATENTSCHRIFT

(11) **EP 1 147 032 B1**
(45) Veröffentlichungstag und Bekanntmachung des Hinweises auf die Patenterteilung: **22.11.2006**
(21) Anmeldenummer: 00982930.0
(22) Anmeldetag: 28.09.2000
(51) Int. Cl.: B60Q 1/48

(54) **EINRICHTUNG ZUR ÜBERWACHUNG DER UMGEBUNG EINES EINPARKENDEN FAHRZEUGS**
DEVICE FOR MONITORING THE SURROUNDING AREA OF A VEHICLE DURING PARKING
DISPOSITIF POUR SURVEILLER LES ABORDS D'UN VEHICULE EN COURS DE STATIONNEMENT

(30) Priorität: 02.10.1999 DE 19947766
(43) Veröffentlichungstag der Anmeldung: 24.10.2001
(73) Patentinhaber: ROBERT BOSCH GMBH, 70442 Stuttgart (DE)
(72) Erfinder: JANSSEN, Holger, 31840 Hessisch Oldendorf (DE)
(86) Internationale Anmeldenummer: PCT/DE2000/003418
(87) Internationale Veröffentlichungsnummer: WO 2001/025054

(56) Entgegenhaltungen:
- DE-A- 19 801 884
- US-A- 5 479 173
- US-A- 5 646 614

## Beschreibung

### Stand der Technik

Die Erfindung geht aus von einer Einrichtung zur Überwachung der Umgebung eines einparkenden Fahrzeugs nach der Gattung des Hauptanspruchs. Es ist schon eine solche Einrichtung aus der DE 43 36 288 C1 bekannt, bei der zur Erweiterung des Blickbereichs einer Kamera Mittel zum Verschwenken dieser Kamera vorgesehen sind.

### Vorteile der Erfindung

Die erfindungsgemäße Einrichtung mit den kennzeichnenden Merkmalen des Hauptanspruchs hat demgegenüber den Vorteil, mittels einer einfachen, robusten Anordnung eine sichere Überwachung des Fahrzeugumfelds zu gewährleisten. Bewegliche und damit verschleißanfällige Teile werden vermieden und tote Winkel der Videokamera in die Überwachung einbezogen, so daß der Fahrer bei beispielsweise sich im toten Winkel der Kamera befindlichen Personen ebenfalls eine Gefahrenmeldung erhält und nicht nur dann, wenn fragliche Hindernisse sich im Blickbereich der Kamera befinden. Es besteht also eine ökonomische Funktionsverteilung in der objekterkennung und Meldung an den Fahrer zwischen den Objekterkennungssensoren einerseits und der Kamera andererseits.

Durch die in den abhängigen Ansprüchen aufgeführten Maßnahmen sind vorteilhafte Weiterbildungen und Verbesserungen der im Hauptanspruch angegebenen Einrichtung möglich.

Vorteilhaft ist, daß die Existenz von Objekten außerhalb des Blickbereiches der Kamera separat über eine Anzeigeeinheit darstellbar ist. Dadurch wird sofort die Aufmerksamkeit des Fahrers in eine Richtung gelenkt, in der Gefahr droht, obwohl er über das Videobild noch nichts erkennen kann.

Besonders vorteilhaft ist das Vorsehen einer Objekterkennungseinheit, die sowohl Daten der Objekterkennungssensoren als auch die Videobilder zur Auswertung von Objekten verarbeitet. Die Kombination mehrerer Sensorinformationen zu einer Gesamtanzeige hat den Vorteil, daß das Systemverhalten jederzeit transparent ist, da der Fahrer die Angaben auch visuell prüfen kann. Der Fahrer ist nicht auf wenige Parameter, wie z.B. auf den Fahrzeugabstand zum Hintermann, die isolierte Objekterkennungssensoren liefern würden, angewiesen. Dadurch ist eine einfache Kontrolle und Fahrkorrektur durch den Fahrer jederzeit möglich.

Die visuelle Präsentation der Ergebnisse im Bild der aufnehmenden Videokamera hat den Vorteil, daß der Fahrer sehr gut die Situation aufnehmen kann, da er gewohnt ist, das Fahrzeug basierend auf visueller Information zu lenken.

Weitere Vorteile ergeben sich durch die in den weiteren abhängigen Ansprüchen und in der Beschreibung genannten Merkmalen.

### Zeichnung

Ausführungsbeispiele der Erfindung sind in der Zeichnung dargestellt und in der nachfolgenden Beschreibung näher erläutert. Es zeigen:
Figur 1 eine Draufsicht auf ein Fahrzeug mit einer Einrichtung zur Überwachung,
Figur 2 ein Fahrzeug mit einer weiteren Einrichtung,
Figur 3 eine schematische Darstellung einer weiteren Einrichtung,
Figur 4 eine Bildschirmeinheit 55,
Figur 5 eine weitere Bildschirmeinheit 55' und
Figur 6 eine Einparkszene.

### Beschreibung der Ausführungsbeispiele

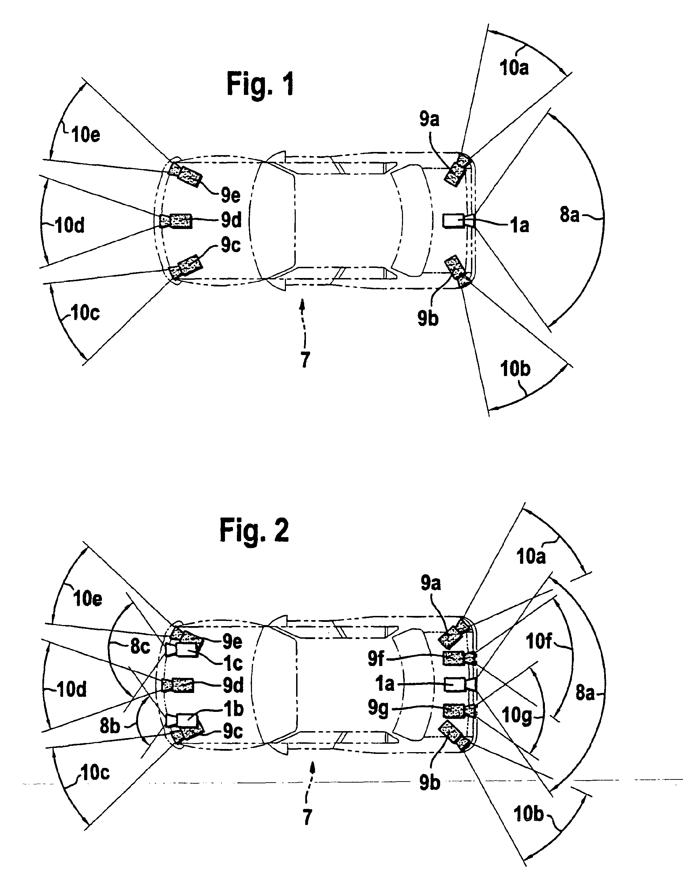

Figur 1 zeigt eine Draufsicht auf ein Fahrzeug 7. Im Rückraum des Fahrzeugs 7 ist eine Videokamera 1a angeordnet, die den rückwärtigen Bereich des Fahrzeug in einem Blickbereich 8a aufnimmt. Der Videokamera 1a benachbart sind Objekterkennungssensoren 9a und 9b angebracht, die zur Erkennung von Objekten in den Umfeldsektoren 10a bzw. 10b dienen. Diese Umfeldsensoren 10a und 10b sind dem Blickbereich 8a unmittelbar benachbart, liegen jedoch außerhalb dieses Blickbereichs. Desweiteren sind nach vorn ausgerichtete Objekterkennungssensoren 9c, 9d und 9e im Bereich des vorderen Stoßfängers des Kraftfahrzeugs angeordnet, die auf den Vorderraum ausgerichtete Umfeldsektoren 10c, 10d bzw. 10e überwachen.

Die mit minimalem Aufwand fest installierte und unbewegliche Videokamera 1a deckt einen vorgegebenen Blickbereich 8a ab, der über eine beispielsweise im Armaturenbrett oder der Mittelkonsole des Fahrzeugs angeordnete Bildschirmeinheit dem Fahrer dargestellt werden kann. Mittels der Objekterkennungssensoren 9a und 9b lassen sich insbesondere Objekte erkennen, die sich dem von der Kamera aufgenommenen Bereich nähern, aber im Bild noch nicht erfaßt sind. Solche erkannten Objekte können dann dem Fahrer gemeldet werden, obwohl sie noch nicht im Kamerabild zu erkennen sind. Dies ist beispielsweise ein Kind, das sich dem Fahrzeug von der Seite nähert, wobei der Fahrer dieses Kind aber weder im angezeigten Bild der Kamera noch in den Rückspiegeln erkennen kann, da es sich im toten Winkel befindet. Die Objekterkennungssensoren sind beispielsweise als Ultraschall-, Radar-, Video- oder Lidarsensoren ausgestaltet. Die zusätzlichen Sensoren 9c, 9d und 9e können dazu verwendet werden, bei Parkmanövern jederzeit den Abstand zum vorderen parkenden Fahrzeug zu messen oder weitere (gefährdete) Objekte zu erkennen. Wird der Abstand zum vorderen Fahrzeug oder sonstigem Objekt zu klein, kann eine Meldung ausgegeben werden.

Die zusätzlichen Sensoren können aber auch an jeder beliebigen Stelle des Fahrzeugs installiert sein, um das entsprechende Umfeld zu überwachen. Beispielsweise bietet der zeitliche Fahrzeugbereich weitere Anbringungsmöglichkeiten, in dem Objekte beobachtet und entsprechende Warnungen an den Fahrer ausgegeben werden können. Wird die Objekterkennung monokular durchgeführt, ergeben sich Kosteneinsparungen, da nur eine Kamera verwendet wird. Solche Verfahren haben jedoch gegenüber Stereoverfahren den Nachteil, daß sie keine hochgenaue und zuverlässigen Ergebnisse liefern. Gerade durch die Kopplung der monokularen Objektdetektion mit anderen Sensoren wie beispielsweise Ultraschallsensoren kann hier die Genauigkeit und Zuverlässigkeit erheblich gesteigert werden.

Figur 2 zeigt das Fahrzeug 7 mit zusätzlich installierten Videokameras 1b und 1c, deren zugehörige Blickbereiche 8b bzw. 8c den Vorderraum des Fahrzeugs abdecken. Die Kameras sind dabei zwischen den Objekterkennungssensoren 9c, 9d bzw.9e angebracht, so daß die drei genannten Objekterkennungssensoren ergänzend zu den Kameras die Randbereiche der Blickbereiche 8b bzw. 8c überwachen. Darüber hinaus sind weitere Objekterkennungssensoren 9f bzw. 9g im rückwärtigen Teil des Fahrzeugs angebracht, wobei deren zugehörige Umfeldsektoren 10f bzw. 10g teilweise mit dem Blickbereich 8a der Videokamera 1a überlappen und so ergänzend zur Videokamera diese Bereiche des Blickbereichs 8a in Überwachung nehmen.

Das Vorsehen zusätzlicher Objekterkennungssensoren im rückwärtigen Fahrzeugteil dient zur Erhöhung der Sicherheit in der Objekterkennung durch Erzeugung von Datenredundanz. Wird das Fahrzeug 7 mit einem Anhänger betrieben, so kann, falls der Anhänger den Blickbereich bzw. die Umfeldsektoren der rückwärtigen Kamera bzw. die rückwärtigen Objekterkennungssensoren verdeckt, dieser Anhänger mit einer analogen Beobachtungseinrichtung 1a, 9a, 9b, 9f, 9g versehen sein, die auf dem Bereich hinter dem Anhänger ausgerichtet ist. So können auch Fahrzeuge mit Anhängerbetrieb den Fahrer bei einem Rangiermanöver unterstützen.

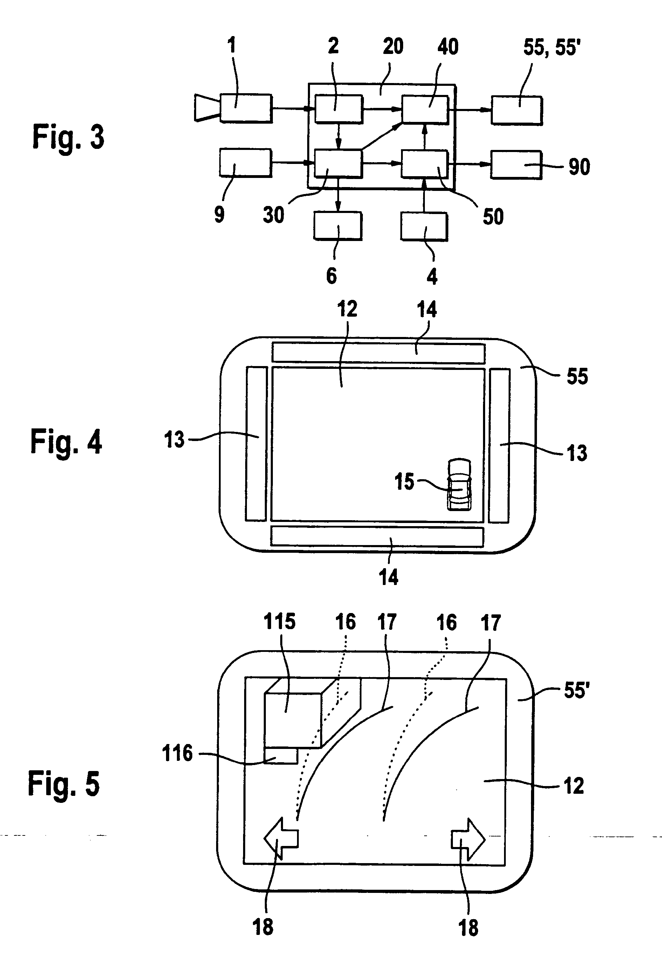

Figur 3 zeigt den schematischen Aufbau einer Einrichtung zur Überwachung der Umgebung eines einparkenden Fahrzeugs, bei der die Gesamtheit der Videokameras mit Bezugszeichen 1 und die Gesamtheit der Objekterkennungssensoren mit Bezugszeichen 9 bezeichnet sind. Die Videokameras und die Objekterkennungssensoren sind mit einer Kontrolleinheit 20 verbunden. Die Kontrolleinheit 20 weist eine Bildverarbeitungseinheit 2 auf, die die Bilddaten der Videokameras 1 verarbeitet. Die Bildverarbeitungseinheit 2 liefert aufbereitete Bilddaten an eine Objekterkennungseinheit 30, die sowohl die aufbereiteten Bilddaten der Videokameras als auch die Signale der Objekterkennungssensoren 9 verarbeitet. Über eine akustische Anzeige 6 können erkannte Objekte bzw. Gefahrensituationen dem Fahrer gemeldet werden. Die akustische Anzeige ist im Insassenbereich des Fahrzeugs angeordnet. Eine Überlagerungseinheit 40 steht in Verbindung mit der Bildverarbeitungseinheit 2 und der Objekterkennungseinheit 30. Diese Überlagerungseinheit 40 überlagert von der Objekterkennungseinheit 30 gelieferte Informationen bezüglich erkannter Objekte mit den aufbereiteten Bilddaten der Bildverarbeitungseinheit 2 zur Darstellung in einer Bildschirmeinheit 55 bzw. 55'. Die Objekterkennungseinheit 30 ist ferner mit einer Manöverberechnungseinheit 50 verbunden, die aus den Objektdaten der Objekterkennungseinheit 30 und extern zugeführten Parametern 4, beispielsweise des gewählten Lenkradwinkels, Fahrmanöver berechnet und diese Daten an die Überlagerungseinheit 40 weitergibt zur visuellen Darstellung in der Bildschirmeinheit. Die Manöverberechnungseinheit 50 ist darüber hinaus mit einer Steuereinheit 90 zur selbstätigen Durchführung eines Fahrmanövers verbunden.

In der Kontrolleinheit 20 können die Bilder der Videokameras mit Hilfe von Bildverarbeitungsalgorithmen aufbereitet werden und auf einer Bildschirmeinheit 55 bzw. 55' angezeigt werden. Die Algorithmen der Kontrolleinheit können dabei auch auf Fahrzeugparameter, wie beispielsweise Fahrzeuggeschwindigkeit und Lenkwinkel des Lenkrades, zurückgreifen. In der Bildschirmeinheit können neben dem Bildinhalt der Kameras auch Zusatzinformationen, wie z.B. Warnungen über Objekte im Fahrzeugumfeld, angezeigt werden. Es besteht die Möglichkeit Warnungen über die akustische Anzeige 6 auch akustisch auszugeben. Die Bildverarbeitungseinheit 2 umfaßt dabei Algorithmen zur Bildaufbereitung wie Rauschunterdrückung, Bildentzerrung oder ähnliches. Die verarbeiteten Bilder wären von der Überlagerungseinheit 40 mit zusätzlichen Bildinhalten kombiniert und auf der Bildschirmeinheit angezeigt. Die Objekterkennungseinheit 30 erhält Daten von den Objekterkennungssensoren und von der Bildverarbeitungseinheit. Bekannte Objekte werden zur Anzeige in der Bildschirmeinheit an die Überlagerungseinheit 40 übermittelt und zur Manöverberechnung auch an die Manöverberechnungseinheit 50 weitergeleitet. Für die Berechnung von Manövern können externe Parameter herangezogen werden. Die Manöverberechnungseinheit kann die berechneten Manöver geeignet für die Bildschirmeinheit zur Darstellung aufbereiten und gegebenenfalls mittels einer Steuereinheit 90 in die Steuerung des Fahrzeugs eingreifen. Beispielhaft als Aktuatoriken seien die Lenkwinkelbeeinflussung und Eingriff in die Motor und Bremssteuerung genannt. Die Objekterkennungseinheit 30 setzt bei der Umfelderkennung zunächst nicht eine bestimmte Einparkgeometrie oder ähnliches voraus, sondern generiert aufgrund der tatsächlich vorliegenden Bild- bzw. Objekterkennungsdaten eine Beschreibung des Umfelds. Die Modellierung der Umgebung und die Bilder der Kameras werden so durch die Überlagerungseinheit 40 zu einer Darstellung zusammengesetzt. Diese dient dazu, den Fahrer umfassend von der gegenwärtigen Situation des Fahrzeugumfeldes zu informieren. Die Objekterkennung liefert dabei den Ort und die Anzahl der Objekte und kann je nach verwendeten Sensorsystem unterschiedliche Objektgrößen in unterschiedlichen Genauigkeiten liefern. Diese Daten (Größe und Entfernung der Objekte) können ebenfalls in die Bildschirmeinheit angezeigt werden, in dem die Objekterkennungseinheit 30 diese Daten ebenfalls in geeigneter Weise der Überlagerungseinheit 40 übermittelt. Mittels der Manöverberechnungseinheit 50 kann die Einrichtung neben dem passiven Erfassen der momentanen Situation im Fahrzeugumfeld dem Fahrer auch aktiv beim Steuern des Fahrzeugs assistieren. Die Objekterkennungseinheit 30 übermittelt der Manöverberechnungseinheit 50 die Modellierungsdaten bzw. Objekterkennungsdaten der Umgebung. Für bestimmte Szenarien wird dann durch die Manöverberechnungseinheit 50 ein Fahrzeugkurs berechnet. Im folgenden seien einige vorteilhafte Möglichkeiten aufgeführt:
1. Der Fahrzeugkurs weicht erkannten Hindernissen aus.
2. Der Fahrzeugkurs führt in eine Parklücke parallel zur Fahrbahn.
3. Der Fahrzeugkurs führt in eine Parklücke senkrecht zur Fahrbahn.
4. Der Fahrzeugkurs führt in eine Parklücke schräg zur Fahrbahn.
5. Der Fahrzeugkurs führt an eine bestimmte Sollposition zwischen mehreren Hindernissen, wobei diese z.B. konfiguriert werden können. So ist zum Beispiel als Sollposition die Position in der heimischen Garage und als Hindernis das Tor vor dieser Garage. Für die Berechnung der oben genannten Fahrzeugkurse kann auch berücksichtigt werden, daß an ein Fahrzeug ein Anhänger angekoppelt ist und der Fahrer zunächst eventuell gegenlenken sollte, um in eine bestimmte Sollposition zu kommen. Entweder ist die Manöverberechnungseinheit so ausgestaltet, daß sie die oben genannten verschiedenen Situationen automatisch erkennt, oder der Fahrer hat die Möglichkeit, über ein im Amaturenbrett angebrachtes Auswahlmittel die entsprechende Einparkvariante zu wählen. Bestimmte Manöver, wie beispielsweise das Einparken in die heimische Garage oder andere Standardmanöver können auch abgespeichert bzw. vorprogrammiert werden. Dazu weist die Manöverberechnungseinheit einen geeigneten Programmspeicher auf, von dem aus die abgespeicherten Manöver aufrufbar sind.

Aus den oben genannten Ausführungen ergeben sich folgende Abstufungen für den Grad des Fahrzeugeingriffs durch die erfindungsgemäße Einrichtung:
1. Die Bilder der Videokameras werden in der im Amaturenbrett oder in der Mittelkonsole angebrachten Bildschirmeinheit angezeigt.
2. Gleichzeitig werden Objektinformationen, wie Größe, Lage und Abstand in geeigneter Weise eingeblendet.
3. Zusätzlich werden Informationen zum Fahrzeugzustand eingeblendet, wie z.B. den eingeschlagenen Lenkwinkel, der den zugehörigen Fahrschlauch, den Blickwinkel des Fahrzeugs bezüglich der Straße (also den Winkel der Normalen durch das Auto relativ zur Straßennormalen) usw.
4. Es werden Lenkmanöver durch die Manöverberechnungseinheit 50 berechnet und in der Bildschirmeinheit angezeigt. Der Lenkwinkel wird vom System, abhängig von der gegenwärtigen Situation, berechnet und auf dem Kamerabild zusätzlich zum aktuellen Fahrzeuglenkwinkel eingeblendet. Der Fahrer macht anhand der eingeblendeten Lenkwinkel einen Soll-/Istvergleich und schlägt das Lenkrad entsprechend ein. Der Fahrer behält dadurch jederzeit die volle Kontrolle. Die erforderliche Lenkrichtung kann auch (zusätzlich) durch entsprechend eingeblendete Pfeile angezeigt werden.
5. Die Einrichtung stellt über die Steuereinheit 90 den berechneten Lenkwinkel automatisch ein, so daß direkt in die Lenkung eingegriffen wird. Der Lenkwinkel kann jedoch jederzeit vom Fahrer übersteuert werden und somit ein eigener Lenkwinkel gewählt werden. Der Fahrer steuert die Fahrzeuglängsbewegung, also Motor und Bremse, weiterhin selbst.
6. In einer vollständig autonomen Betriebsweise steuert die Einrichtung das Fahrzeug voll automatisch durch Eingriff sowohl in Lenkung als auch Motorsteuerung aufgrund der berechneten Fahrzeugmanöverdaten. Das Manöver kann auch hier jederzeit vom Fahrer abgebrochen werden.

Die Objekterkennungseinheit 30 und die Manöverberechnungseinheit 50 können in einer alternativen Ausführungsform so ausgestaltet werden, daß die aktive Manöversteuerung gemäß Punkt 6 beispielsweise in folgenden Situationen automatisch abgebrochen wird:
1. Objekte, insbesondere schnell bewegte Objekte, tauchen im Fahrbereich, insbesondere im rückwärtigen Fahrzeugbereich, auf.
2. Objekte wurden grob fehlerhaft vermessen.
3. Es besteht akute Kollisionsgefahr mit einem Objekt.
4. Gefährdete Objekte (Lebewesen) treten auf.

Figur 4 zeigt eine Ausgestaltungsform 55 der Bildschirmeinheit zur Anzeige der von den Kameras gelieferten und von der Kontrolleinheit verarbeiteten Bilder. Die Bildschirmeinheit 55 weist einen Bildbereich 12 sowie sowohl vertikale Randbereiche 13 als auch horizontale Randbereiche 14 auf, die zusammen den Bildbereich 12 umranden.

Im Bildbereich 12 selbst und in den vertikalen als auch horizontalen Randbereichen des Bildbereichs können farbige Balken angezeigt werden zur optischen Meldung von Objekten im Fahrzeugumfeld, das nicht vom Blickbereich der Videokamera (S) erfaßt wird. Zusätzlich kann an einer geeigneten Stelle ein Piktogramm 15 eingeblendet werden zur Darstellung des eigenen Fahrzeugs. In der Umgebung dieses Fahrzeugs kann ebenfalls die Position erkannter Objekte eingezeichnet werden. Die Bildschirmeinheit 55 kann vorteilhafter Weise in das Amaturenbrett oder in die Mittelkonsole des Fahrzeugs integriert werden.

Als Warnfarbe kann in den Randbereichen eine Signalfarbe, beispielsweise rot, eingesetzt werden. Je nachdem, welcher Balken aufleuchtet, weiß der Fahrer sofort, auf welche Seite des Fahrzeugs er besonders achten muß, obwohl das Kamerabild ihm noch keine Hinweise liefert. Eine zusätzliche Unterstützung kann parallel hierzu durch die akustische Anzeige 6 erfolgen.

Figur 5 zeigt eine weitere Ausgestaltung 55' der Bildschirmeinheit. Im Bildbereich 12 ist ein Kubus 115 dargestellt, der in seiner Größe und seiner Form ungefähr ein erkanntes Objekt repräsentiert. In dem Bereich 116 können Daten für die Entfernung oder die Größe dieses Objekts eingeblendet werden. Die Linien 16 markieren den Fahrschlauch des Fahrzeugs, wenn der gegebene Lenkwinkel beigehalten würde. Die Linien 17 markieren den Fahrschlauch, den das Fahrzeug belegen würde, wenn der Fahrer der berechneten Route folgen würde. Die Pfeile 18, die alternativ aufscheinen, je nachdem in welche Richtung der Fahrer das Lenkrad einschlagen soll, weisen ihn daraufhin, wie er sich zur Erreichung des Lenkwinkelvorschlags, der durch die Linien 17 markiert ist, beim Lenken verhalten muß.

All die genannten Informationen werden in den Bildbereich 12 mit dem Bild der Videokamera überlagert zur schnellen und exakten Information des Fahrers über die Lage. Bei weiterhin manueller Fahrzeugführung kann auch vorgesehen sein, bei vorhandenen Sensoren und Kameras auch im vorderseitigen Fahrzeugbereich eine automatische Umschaltung zwischen der vorderen und der hinteren Videokamera vorzusehen, je nachdem welchen Gang der Fahrzeugführer gerade eingelegt hat.

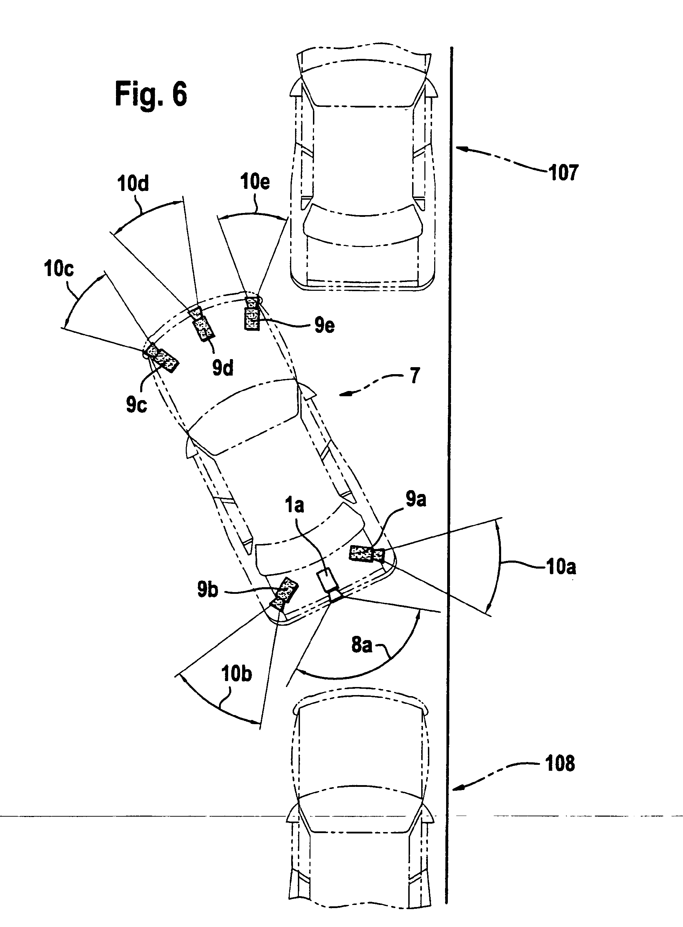

Figur 6 zeigt beispielhaft ein Einparkmanöver des Fahrzeugs 7 hinter das parkende Fahrzeug 107 und vor das parkende Fahrzeug 108. Gleiche Bezugszeichen wie in den vorangegangenen Figuren bezeichnen gleiche Teile und werden nicht nochmals beschrieben.

Insbesondere die seitlich angeordneten Objekterkennungssensoren 9a und 9b erfassen Bereiche, die von der festinstallierten Kamera 8a nicht beobachtet werden können, jedoch für das Einparken von Relevanz sind, insbesondere, wenn unvorsichtige Fußgänger beispielsweise in die Bereiche knapp außerhalb des Blickbereichs 8a der Kamera 1a eintreten. In diesem Falle erhält der Fahrer über die Bildschirmeinheit eine entsprechende Warnung und kann sich entsprechend verhalten, bis diese Fußgänger sich wieder aus dem toten Winkel des Fahrzeugs entfernen. Auch die vorderen Objekterkennungssensoren 9c, 9d und 9e liefern den genauen Abstand zum vorderen Fahrzeug 107 und vereinfachen ihm das Einparken insbesondere bei unübersichtlichen Fahrzeugkarosserien, die die Begrenzungen des Fahrzeugs vom Fahrersitz nur erahnen lassen.

## Patentansprüche

1. Einrichtung zur Überwachung der Umgebung eines einparkenden Fahrzeugs mit mindestens einer Videokamera mit einem Blickbereich und einer Bildschirmeinheit (55) zur Darstellung des Blickbereichs, **dadurch gekennzeichnet, daß** der Blickbereich relativ zum Fahrzeug unveränderbar vorgegeben ist und daß mindestens ein Objekterkennungssensor vorgesehen ist zur Erkennung von Objekten in einem Bereich außerhalb des Blickbereichs, der dem Blickbereich unmittelbar benachbart ist, so daß über mindestens eine Anzeigeeinheit (6; 55) dem Fahrer die Existenz von Objekten mitgeteilt wird, die nicht im Blickbereich der Kamera liegen.

2. Einrichtung nach Anspruch 1, **dadurch gekennzeichnet, daß** die Existenz von Objekten außerhalb des Blickbereichs in Randbereichen (13, 14) der Bildschirmeinheit (55) darstellbar ist.

3. Einrichtung nach einem der vorhergehenden Ansprüche, **dadurch gekennzeichnet, daß** die Objekterkennungssensoren mit einer Objekterkennungseinheit (30) verbunden sind, die gleichzeitig mit einer Bildverarbeitungseinheit zur wahlweise digitalen Bildverarbeitung der Bilder der Videokamera in Verbindung steht, so daß auch Objekte im Blickbereich der Videokamera automatisch erkennbar und dem Fahrer mitteilbar sind.

4. Einrichtung nach Anspruch 3, **dadurch gekennzeichnet, daß** mittels der Objekterkennungseinheit (30) erkannte Objekte durch einfache geometrische Formen modellierbar sind und mittels einer nachgeschalteten Überlagerungseinheit (40) dem Videobild die geometrischen Formen (115) überlagerbar sind.

5. Einrichtung nach einem der vorhergehenden Ansprüche, **dadurch gekennzeichnet, daß** eine Manöverberechnungseinheit (50) vorgesehen ist zur Weiterverarbeitung externer Parameter, insbesondere des momentanen Lenkwinkels, so daß in der Bildschirmeinheit (55) eine Ist-Lenkwinkelanzeige (17) erfolgen kann.

6. Einrichtung nach Anspruch 3 und 5, **dadurch gekennzeichnet, daß** der Manöverberechnungseinheit (50) von der Objekterkennungseinheit (30) Daten über erkannte Objekte zuführbar sind, so daß die Manöverberechnungseinheit (50) anhand dieser Daten ein Rangiermanöver berechnen kann.

7. Einrichtung nach Anspruch 6, **dadurch gekennzeichnet, daß** das Rangiermanöver in Form eines Lenkwinkelvorschlags (17) in der Bildschirmeinheit (55) darstellbar ist.

8. Einrichtung nach Anspruch 6 oder 7, **dadurch gekennzeichnet, daß** die Manöverberechnungseinheit (50) mit einer Steuereinheit (90) verbunden ist zur selbsttätigen Durchführung eines Rangiermanövers.

9. Einrichtung nach Anspruch 8, **dadurch gekennzeichnet, daß** die Manöverberechnungseinheit (50) Speichermittel aufweist zum Abspeichern von Standardrangiermanövern, insbesondere das Einparken in eine private Garage, so daß bei Erkennung der entsprechenden Umgebung durch die Objekterkennungseinheit (30) die Standardrangiermanöver zur selbstätigen Durchführung des Rangiermanövers abgerufen werden können.

10. Einrichtung nach einem der vorhergehenden Ansprüche, **dadurch gekennzeichnet, daß** die Objekterkennungssensoren Ultraschall-, Radar- oder Lidarsensoren sind.

11. Einrichtung nach Anspruch 3, **dadurch gekennzeichnet, daß** mittels der Objekterkennungseinheit (30) die Abstände zu erkannten Objekten berechenbar sind, so daß die Zahlenwerte der Abstände in der Bildschirmeinheit (55) einblendbar sind.

## Claims

1. Device for monitoring the surroundings of a vehicle being parked, having at least one video camera with a viewing region and a display screen unit (55) for displaying the viewing region, **characterized in that** the viewing region is unchangeably described relative to the vehicle, and **in that** at least one object detection sensor is provided for detecting objects in a region outside the viewing region which is immediately adjacent to the viewing region such that the driver is informed of the existence of objects which do not lie in the viewing region of the camera via at least one display unit (6; 55).

2. Device according to Claim 1, **characterized in that** the existence of objects outside the viewing region can be displayed in marginal regions (13, 14) of the display screen unit (55).

3. Device according to one of the preceding claims, **characterized in that** the object detection sensors are connected to an object detection unit (30) which is simultaneously connected to an image processing unit for optional digital image processing of the images of the video camera, such that objects in the viewing region of the video camera can also be detected automatically and the driver can be informed of them.

4. Device according to Claim 3, **characterized in that** objects detected by means of the object detection unit (30) can be modelled by simple geometrical shapes, and the geometrical shapes (115) can be overlaid on the video image by means of a downstream overlay unit (40).

5. Device according to one of the preceding claims, **characterized in that** a manoeuvre calculation unit (50) is provided for further processing external parameters, particularly the instantaneous steering angle, such that an actual steering angle display (17) can be performed on the display screen unit (55).

6. Device according to Claims 3 and 5, **characterized in that** the manoeuvre calculation unit (50) can be fed data relating to detected objects by the object detection unit (30) such that the manoeuvre calculation unit (50) can calculate a positioning manoeuvre with the aid of these data.

7. Device according to Claim 6, **characterized in that** the positioning manoeuvre can be displayed on the display screen unit (55) in the form of a steering angle suggestion (17).

8. Device according to Claim 6 or 7, **characterized in that** the manoeuvre calculation unit (50) is connected to a control unit (90) for automatically carrying out a positioning manoeuvre.

9. Device according to Claim 8, **characterized in that** the manoeuvre calculation unit (50) has storage means for storing standard positioning manoeuvres, in particular parking in a private garage, so that upon detection of the corresponding surroundings by the object detection unit (30) the standard positioning manoeuvres can be retrieved by the object detection unit (30) for the purpose of automatically carrying out the positioning manoeuvre.

10. Device according to one of the preceding claims, **characterized in that** the object detection sensors are ultrasonic, radar or lidar sensors.

11. Device according to Claim 3, **characterized in that** the distances from detected objects can be calculated by means of the object detection unit (30) such that the numerical values of the distances can be inserted in the display screen unit (55).

## Revendications

1. Dispositif de surveillance de l'environnement d'un véhicule en stationnement, comprenant au moins une caméra vidéo ayant un champ de vision et un écran (55) pour représenter le champ de vision,
**caractérisé en ce que**
le champ de vision par rapport au véhicule est prédéfini de manière invariable, et
au moins un capteur d'identification d'objets prévu pour identifier des objets dans une zone hors du champ de vision directement voisine du champ de vision, permet d'indiquer au conducteur l'existence d'objets qui ne se situent pas dans le champ de vision de la caméra au moyen d'au moins une unité d'affichage (6 ; 55).

2. Dispositif selon la revendication 1,
**caractérisé en ce que**
l'existence d'objets hors du champ de vision peut être représentée dans des zones marginales (13, 14) de l'écran (55).

3. Dispositif selon l'une quelconque des revendications précédentes,
**caractérisé en ce que**
les capteurs d'identification d'objets sont reliés à une unité d'identification d'objets (30), qui est simultanément en communication avec une unité de traitement d'images pour un traitement d'images, au choix numérique, des images de la caméra vidéo, de manière à pouvoir identifier et indiquer automatiquement au conducteur également des objets dans le champ de vision de la caméra vidéo.

4. Dispositif selon la revendication 3,
**caractérisé en ce que**
des objets identifiés au moyen de l'unité d'identification d'objets (30) peuvent être modélisés par des formes géométriques simples, et les formes géométriques (115) peuvent être superposées à l'image vidéo au moyen d'une unité de superposition (40) placée en aval.

5. Dispositif selon l'une quelconque des revendications précédentes,
**caractérisé en ce qu'**
une unité de calcul de manoeuvre (50) est prévue pour le traitement ultérieur de paramètres externes, en particulier de l'angle de braquage momentané, pour permettre un affichage de l'angle de braquage réel (17) sur l"écran (55).

6. Dispositif selon les revendications 3 et 5,
**caractérisé en ce que**
l'unité de calcul de manoeuvre (50) peut recevoir de l'unité d'identification d'objets (30) des données concernant des objets identifiés, pour permettre à l'unité de calcul de manoeuvre (50) de calculer une manoeuvre de stationnement à l'aide de ces données.

7. Dispositif selon la revendication 6,
**caractérisé en ce que**
la manoeuvre de stationnement peut être représentée sur l'écran (55) sous la forme d'une proposition d'angle de braquage (17).

8. Dispositif selon la revendication 6 ou 7,
**caractérisé en ce que**
l'unité de calcul de manoeuvre (50) est reliée à une unité de commande (90) pour l'exécution automatique d'une manoeuvre de stationnement.

9. Dispositif selon la revendication 8,
**caractérisé en ce que**
l'unité de calcul de manoeuvre (50) présente des moyens de mémoire pour enregistrer des manoeuvres de stationnement standard, en particulier pour se garer dans un garage privé, de sorte que lors d'une identification de l'environnement correspondant par l'unité d'identification d'objets (30), les manoeuvres de stationnement standard peuvent être appelées pour l'exécution automatique de la manoeuvre de stationnement.

10. Dispositif selon l'une quelconque des revendications précédentes,
**caractérisé en ce que**
les capteurs d'identification d'objets sont des capteurs à ultrasons, radar ou lidar.

11. Dispositif selon la revendication 3,
**caractérisé en ce que**
l'unité d'identification d'objets (30) permet de calculer les distances par rapport à des objets identifiés, pour pouvoir afficher les valeurs numériques des distances dans l'écran (55).
